# EUROPÄISCHE PATENTSCHRIFT

(11) **EP 2 708 136 B1**
(45) Veröffentlichungstag und Bekanntmachung des Hinweises auf die Patenterteilung: **11.04.2018**
(21) Anmeldenummer: 13173272.9
(22) Anmeldetag: 21.06.2013
(51) Int. Cl.: A22B 3/02, A22B 5/00, A22B 3/06

(54) **Verfahren zur Überprüfung eines ordnungsgemäßen Betäubens eines Schlachttiers**
Method for testing whether an animal for slaughter is properly stunned
Procédé de contrôle du bon fonctionnement de l'étourdissement d'un animal d'abattage

(30) Priorität: 21.06.2012 DE 102012105396
(43) Veröffentlichungstag der Anmeldung: 19.03.2014
(73) Patentinhaber: BANSS SCHLACHT- UND FÖRDERTECHNIK GMBH, 35216 Biedenkopf (DE)
(72) Erfinder: Schmidt, Frank, 35232 Dautphetal (DE); Weide, Harald, 35216 Biedenkopf (DE); Dittmann, Christian, 35239 Steffenberg (DE); Pier, Holger, 48163 Münster (DE); Haugwitz, Dieter, 59075Hamm (DE)
(74) Vertreter: Stoffregen, Hans-Herbert

(56) Entgegenhaltungen:
- EP-A2- 2 389 809
- DE-A1- 4 226 596

## Beschreibung

Die Erfindung bezieht sich auf ein Verfahren zur Überprüfung eines ordnungsgemäßen Betäubens eines Schlachttiers. Insbesondere bezieht sich die Erfindung auf die Überprüfung einer ordnungsgemäßen Betäubung eines Rindes, das vorzugsweise in eine Betäubungsbox eingetrieben und in dieser mittels Bolzenschussbetäubung betäubt wird.

Überprüfungen in Schlachthöfen haben ergeben, dass einige Schlachtschweine nicht ordnungsgemäß gestochen werden, so dass diese am Ende der Entblutestrecke reagieren mit der Folge, dass das Schlachttier beim anschließenden Enthaaren in einer Brühanlage einem unzulässigen Risiko ausgesetzt wird. Daher wird ein Kontrollsystem vorgeschlagen, bei dem die Schweine vor und nach dem Entbluten gewogen werden, damit mittels geeigneter Software Schlachttiere, bei denen die Blutmenge einen bestimmten Grenzwert unterschreitet, aus dem Transportweg geschleust oder der Transport angehalten wird, um eine Nachbearbeitung zu ermöglichen.

Um den Grenzwert bestimmen zu können, ist es jedoch erforderlich, dass das Schlachttier vor oder nach dem Einstechen des Messers gewogen wird, da die Blutmenge vom Gewicht des Schlachttiers abhängig ist.

Die DE 93 10 215 U1 bezieht sich auf eine Vorrichtung zur elektrischen Überwachung von elektrischen Betäubungsvorgängen an Schlachttieren. Dabei werden während des Betäubungsvorgangs Betäubungsspannung und Stromflüsse aufsummiert und registriert, um festzustellen, wann der erforderliche Betäubungsstrom den erforderlichen Mindestwert erreicht hat, der einer korrekten Betäubung entspricht.

Gegenstand der DE 601 05 806 T2 sind ein Verfahren und eine Vorrichtung zum Betäuben und Schlachten von Wassertieren wie Aalen. Diese werden einem von Strom durchflossenen Wasser ausgesetzt, wobei ein EEG (Elektroenzephalogramm) oder EKG (Elektrokardiogramm) des Tieres aufgenommen wird.

Der EP 1 799 041 B1 sind ein Verfahren und eine Vorrichtung zum Überprüfen des Ausblutens eines Schlachttieres zu entnehmen. Hierzu wird nach Entfernen des Stechmessers aus dem Schlachttier ein Bild aufgenommen, das einen Bereich unter dem Schlachttier abdeckt, in den das Blut des Schlachttiers gelangt. Dabei wird die Menge Blut in dem Bild als Fläche des Bildfeldes bestimmt, um von der Größe der Blutfläche Rückschlüsse auf ein ordnungsgemäßes Schlachten ziehen zu können.

Aus der EP 2 389 809 A2 ist ein Verfahren zur Überprüfung eines ordnungsgemäßen Tötens eines Schlachttieres bekannt. Dabei wird ein gestochenes Tier innerhalb eines Zeitfensters nach dem Stechen behandelt, um aus der sich ergebenden Reaktion auf ein ordnungsgemäßes Töten schließen zu können. Als Reaktion kann eine Bewegung des Schlachttieres auftreten, die durch Gewichtsschwankungen erfasst werden.

Wesentlich ist auch bei einem artgerechten Schlachten eines Tiers, dass der Betäubungsvorgang ordnungsgemäß durchgeführt wird, so dass die nachfolgenden Bearbeitungsschritte wie Entbluten oder Brühen von dem Schlachttier nicht wahrgenommen werden können.

Der vorliegenden Erfindung liegt daher die Aufgabe zu Grunde, ein Verfahren zur Überprüfung eines ordnungsgemäßen Betäubens eines Schlachttiers zur Verfügung zu stellen, durch das sichergestellt ist, dass Schlachttiere, die nicht ordnungsgemäß betäubt werden, einer weiteren Bearbeitung nicht unterzogen werden, vielmehr aus dem Schlachtprozess ausgeschleust werden können.

Zur Lösung sieht die Erfindung ein Verfahren vor zur Überprüfung eines ordnungsgemäßen Betäubens eines Schlachttiers, insbesondere eines Rinds, das vorzugsweise in einer Betäubungsbox eingetrieben und in dieser z. B. mit einem pneumatischen Bolzenschussgerät betäubt wird. Es zeichnet sich dadurch aus, dass das Schlachttier zeitabhängig zumindest nach dem Betäuben und vor Setzen eines Entblutestichs gewogen wird und dass in Abhängigkeit von der gemessenen Gewichtsveränderung nach dem Betäuben eine Bewertung eines ordnungsgemäßen Betäubens erfolgt, wobei eine zunächst scheinbare Gewichtsabnahme und sodann eine scheinbare Gewichtszunahme des betäubten Schlachttieres als ordnungsgemäßes Betäuben bewertet wird.

Bei der erfindungsgemäßen Lehre macht man sich die Kenntnis zu Nutze, dass bei einem zu betäubenden Rind dieses nach dem Betäuben verkrampft mit der Folge, dass kurzzeitig ein "Quasischweben" des Rinds in der Betäubungsbox erfolgt. Dieses "Quasischweben" wird gewichtsmäßig durch eine Reduzierung des Gewichts im Vergleich zu dem Gewicht des Schlachttiers vor dem Betäuben erkannt. Nach dem "Quasischweben" fällt das Schlachttier auf die Unterlage, auf dem es sich vor dem Betäuben befand, so dass kurzzeitig eine scheinbare Gewichtszunahme auftritt. Diese Gewichtsab- und -zunahme, die einen sinusförmigen Verlauf aufweisen kann, wird ausgewertet, um Rückschlüsse auf ein ordnungsgemäßes Betäuben ziehen zu können.

Insbesondere ist vorgesehen, dass die Betäubungsbox oder ein Einsatz in der Betäubungsbox, auf dem sich das Schlachttier befindet, als Wiegeeinrichtung ausgebildet wird, mittels der das Schlachttier gewogen wird.

Weitere Einzelheiten, Vorteile und Merkmale der Erfindung ergeben sich nicht nur aus den Ansprüchen, den diesen zu entnehmenden Merkmalen - für sich und/oder in Kombination - , sondern auch aus der nachfolgenden Beschreibung von der Zeichnung zu entnehmenden bevorzugten Ausführungsbeispielen.

Es zeigen:
- Fig. 1: einen Gewichtsverlauf eines ordnungsgemäß betäubten Rindes und
- Fig. 2: einen Gewichtsverlauf eines Rindes, das nicht ordnungsgemäß betäubt worden ist.

Um feststellen zu können, das ein richtlinienkonformes bzw. ordnungsgemäßes Betäuben eines Schlachttieres erfolgt ist, um das Schlachttier sodann üblichen Bearbeitungsschritten zu unterziehen, kommen erfindungsgemäß verschiedene Maßnahmen zur Anwendung, die anhand der Figuren rein prinzipiell erläutert werden.

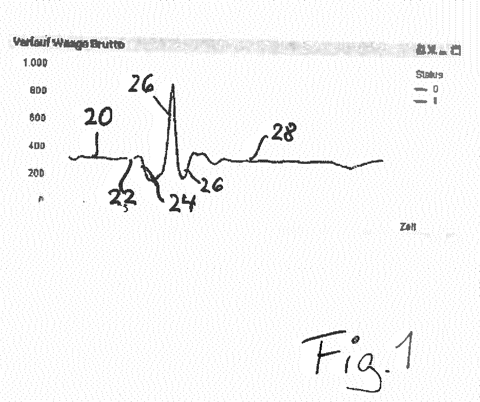

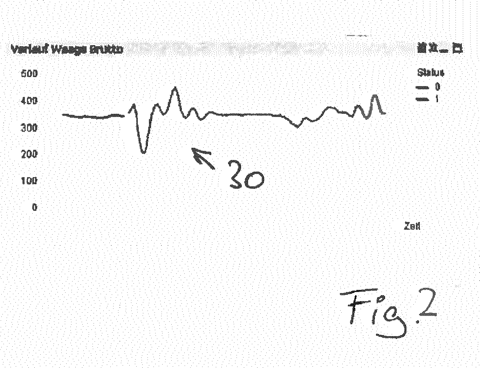

Anhand der Fig. 1 und 2 soll verdeutlicht werden, wie ein ordnungsgemäßes Betäuben eines großen Schlachttieres überwacht werden kann, um ggfs. ein Herausschleusen und Nachbearbeiten bei nicht richtlinienkonformem Betäuben vornehmen zu können. Dabei macht man sich die Kenntnis zu Nutze, dass nach dem Betäuben eines Rindes dieses verkrampft mit der Folge, dass ein kurzzeitiges scheinbares Schweben des Rindes erfolgt. Anschließend bricht das Schlachttier zusammen. Diese Vorgänge äußern sich in scheinbaren Gewichtsveränderungen des Schlachttieres, die gemessen werden, um sodann auf der Basis des Gewichtsverlaufes Rückschlüsse auf ein ordnungsgemäßes Betäuben schließen zu können.

So ist in Fig. 1 der Gewichtsverlauf eines Rindes in Abhängigkeit von der Zeit dargestellt. Die Kurve 20 gibt das Gewicht des Rindes vor dem Betäuben wieder. Der Zeitpunkt des Betäubens des Schlachttieres ist durch die Lücke 22 in der Kurve erkennbar. Beim ordnungsgemäßen Betäuben verkrampft sodann das Schlachttier. Dies äußert sich durch eine scheinbare Gewichtsabnahme, die grafisch erfassbar ist (Abschnitt 24). Sodann bricht das Schlachttier zusammen, wodurch eine scheinbare abrupte Gewichtserhöhung auftritt, die durch den Kurvenabschnitt 26 erkennbar ist. Sodann schwingt die Wiegeeinrichtung ein. Dies deutet sich durch eine scheinbare Gewichtsabnahme 26 (Bereich 26 der Kurve) an, um sodann das Ursprungsgewicht 28 (Kurvenabschnitt 28) anzuzeigen. Es liegt ein sinusähnlicher Gewichtsverlauf vor, wobei zunächst ein Minimum und sodann ein Maximum durchlaufen werden. Dabei ist die scheinbare Gewichtszunahme zumindest doppelt so groß im Vergleich zur scheinbaren Gewichtsabnahme. Dies ergibt sich aus der Fig. 1. Unabhängig hiervon ist die Gewichtszunahme im Vergleich zum tatsächlichen Gewicht des Schlachttieres auf jeden Fall größer als die scheinbare Gewichtsabnahme aufgrund des Verkrampfens. Der Faktor zwischen Gewichtszunahme und -abnahme liegt zwischen 2 und 4.

Erfolgt eine ordnungsgemäße Betäubung nicht, wie dies in Fig. 2 symbolisiert ist, zeigt sich eine entsprechende Charakteristik des Gewichtsverlaufs nicht. Wird folglich nach dem Betäuben ein entsprechend der Fig. 2 zu entnehmender Gewichtsverlauf festgestellt, wird das Schlachttier als nicht ordnungsgemäß betäubt charakterisiert, um sodann nachbearbeitet zu werden.

## Patentansprüche

1. Verfahren zur Überprüfung eines ordnungsgemäßen Betäubens eines Schlachttiers, insbesondere eines Rindes,
**dadurch gekennzeichnet,**
**dass** das Gewicht des Schlachttiers zeitabhängig zumindest nach dem Betäuben und vor Setzen eines Entblutestichs erfasst wird und dass in Abhängigkeit von einer gemessenen Gewichtsveränderung eine Bewertung eines ordnungsgemäßen Betäubens erfolgt, wobei eine zunächst scheinbare Gewichtsabnahme und sodann eine scheinbare Gewichtszunahme des betäubten Schlachttieres als ordnungsgemäßes Betäuben bewertet wird.

2. Verfahren nach Anspruch 1,
**dadurch gekennzeichnet,**
**dass** das Schlachttier in eine Betäubungsbox eingetrieben und in dieser betäubt wird, und dass die Betäubungsbox oder ein Einsatz in der Betäubungsbox, auf dem sich das Schlachttier befindet, als Wiegeeinrichtung ausgebildet wird, mittels der die Gewichtsveränderung gemessen wird.

3. Verfahren nach Anspruch 1 oder 2,
**dadurch gekennzeichnet,**
**dass** das Schlachttier mittels Bolzenschussbetäubung betäubt wird.

## Claims

1. Method for testing of correct stunning of an animal to be slaughtered, in particular of cattle,
wherein
the weight of the animal to be slaughtered is recorded time-dependently at least after stunning and before making a bleeding cut, and depending on a measured weight change an evaluation of correct stunning is performed, an initially apparent weight loss and then an apparent weight increase of the stunned animal being evaluated as correct stunning.

2. Method according to claim 1,
wherein
the animal to be slaughtered is driven into a stunning box and is stunned therein, and said stunning box or an insert inside said stunning box on which said animal to be slaughtered is standing is designed as a weighing device using which the weight change is measured.

3. Method according to claim 1 or 2,
wherein
the animal to be slaughtered is stunned by means of penetrative stunning.

## Revendications

1. Procédé de contrôle du bon fonctionnement de l'étourdissement d'un animal d'abattage, en particulier d'un boeuf,
**caractérisé en ce**
**que** le poids de l'animal d'abattage est mesuré, en fonction du temps, au moins après l'étourdissement et avant la saignée, et qu'une évaluation du bon fonctionnement de l'étourdissement a lieu en fonction d'une variation du poids mesuré, sachant qu'une perte apparente de poids dans un premier temps suivie d'une prise apparente de poids de l'animal étourdi est considérée comme indiquant le bon fonctionnement de l'étourdissement.

2. Procédé selon la revendication 1,
**caractérisé en ce**
**que** l'animal d'abattage est conduit dans un box d'étourdissement dans lequel il est étourdi, et que le box d'étourdissement ou une section du box d'étourdissement sur laquelle l'animal d'abattage se trouve est conçu(e) comme un dispositif de pesée au moyen duquel la variation du poids est mesurée.

3. Procédé selon la revendication 1 ou 2,
**caractérisé en ce**
**que** l'animal d'abattage est étourdi au moyen d'un pistolet à cheville percutante.
